Europäisches Patentamt

(19) European Patent Office

Office européen des brevets

(11) Publication number : **0 359 363 B1**

(12) **EUROPEAN PATENT SPECIFICATION**

(45) Date of publication of patent specification :
01.04.92 Bulletin 92/14

(51) Int. Cl.⁵ : **F02D 13/02**, F01L 9/02,
F01L 31/22

(21) Application number : 89306642.3

(22) Date of filing : 29.06.89

(54) **Control method for valve-timing changeover in engine.**

(30) Priority : 01.08.88 JP 192239/88

(43) Date of publication of application :
21.03.90 Bulletin 90/12

(45) Publication of the grant of the patent :
01.04.92 Bulletin 92/14

(84) Designated Contracting States :
DE FR GB IT

(56) References cited :
EP-A- 0 265 281
EP-A- 0 275 714
EP-A- 0 297 791
EP-A- 0 338 729
GB-A- 2 146 142
PATENT ABSTRACTS OF JAPAN, vol. 7, no.
126 (M-219)[1271], 31st May 1983; & JP-A-58 44
236 (HONDA GIKEN KOGYO K.K.) 15-03-1983

(73) Proprietor : HONDA GIKEN KOGYO
KABUSHIKI KAISHA
1-1, 2-chome Minami-Aoyama
Minato-ku Tokyo (JP)

(72) Inventor : Seki, Yasunari c/o KABUSHIKI
KAISHA
HONDA GIJUTSU KENKYUSHO No. 4-1,
1-chome
Chuo Wako-shi Saitama-ken (JP)

(74) Representative : Tomlinson, Kerry John et al
Frank B. Dehn & Co. European Patent
Attorneys Imperial House 15-19 Kingsway
London WC2B 6UZ (GB)

## Description

This invention relates to a control method for valve-timing changeover primarily applied to a vehicular engine.

There has been known heretofore from the Japanese Examined Patent Application Publication No. Tokkosho 49-33289 an engine in which a valve timing for at least each one of intake valves or exhaust valves can be changed over as desired between a low-speed valve timing suitable for a low-speed revolution range of the engine and a high-speed valve timing suitable for a high-speed revolution range of the engine. In this type of engine, the valve timing is changed over to the low-speed one in the region or range where revolution speed of the engine is lower than the predetermined one and the intake negative pressure thereof is also lower than the predetermined pressure level (closer to vacuum) while it is changed over to the high-speed one in other than the foregoing region.

With the foregoing arrangement of the prior art, there is a problem of changeover shocks that result from a drastic change in the engine output power that occurs with changeover of the valve timing.

It is, therefore, the object of the present invention to provide a control method for valve-timing changeover in a vehicular engine such that it can minimize said changeover shocks.

In order to achieve the above object, the present invention provides a control method for valve-timing changeover in an engine in which the engine is an electronically controlled fuel injection type, and in which valve timing for at least each one of the intake valves or the exhaust valves can be changed over between a low-speed valve timing suitable for a low-speed revolution range of the engine and a high-speed valve timing suitable for a high-speed revolution range of the engine, said method comprising the steps of:

establishing two,sets of fuel injection quantities for selected operating conditions of the engine, one set of which are first fuel injection quantities suitable for the low-speed valve timing and the other set ofwhich are second fuel injection quantities suitable for the high-speed valve timing;

detecting the selected operating conditions of the engine;

obtaining a value of the first fuel injection quantity from the one set and a value of the second fuel injection quantity from the other set for the detected operating conditions of the engine; and

comparing the obtained values for the first and second fuel injection quantities and outputting a signal for causing a changeover of the valve timing when both said values are substantially equal to each other.

To be more specific, the valve timing changeover herein refers to changing one or both of the valve-open duration and valve-lift amount. The valve timing changeover referred to herein also covers that, in a multi-valve engine, any one of a plurality of intake or exhaust valves for each cylinder of the engine is put to a quiescent position according to the operating condition of the engine.

In an electronically controlled fuel injection type engine, a quantity of air intake into cylinders of the engine which is required in each of various operating conditions determined by such parameters as the revolution speed of the engine, the intake negative pressure, etc. is experimentally obtained and a fuel injection quantity suitable for each operating condition of the engine is thus determined and set in accordance with said experimentally obtained quantity of intake air. When the engine is additionally provided with a valve-timing changeover function, the fuel injection quantity is set separately for each of the low-speed valve timing and the high-speed valve timing.

In the foregoing arrangement, it is when the air intake quantity becomes the same either with the high-speed or low-speed valve timing in a particular operating condition that the fuel injection quantity $Ti_L$ set to conform to the low-speed value timing coincides with the fuel injection quantity $Ti_H$ set to conform to the high-speed valve timing. Since there is a proportional relationship between the intake air quantity and the engine output power, no changeover shocks result if the valve timing is changed over when $Ti_L$ coincides with $Ti_H$.

In an embodiment example of the present invention that will be discussed later, it is so arranged that the valve timing is changed over from the low-speed one to the high-speed one when $Ti_L$ is smaller than or equal to $Ti_H$. A cycle time in an electronic control circuit is so small that the operating condition does not change drastically from a $Ti_L>Ti_H$ condition to a $Ti_L<Ti_H$ condition during this cycle time, so that the valve timing is changed over when it is virtually in a $Ti_L=Ti_H$ condition.

In some cases, the valve timing is not actually changed over due to a malfunction or the like of the valve-timing changeover mechanism even when an instruction to change over the valve timing has been given out. Furthermore, there are cases in which the valve timing is belatedly changed over because of a response delay. Therefore, when the fuel injection quantity is changed over with an instruction to change over the valve timing, there are some cases in which the fuel injection is performed in such a manner as to conform to the low-speed valve timing despite the fact that the intake and exhaust valves are actually operating to open and close in conformity to the high-speed valve timing, or conversely, the fuel injection is performed to conform to the high-speed valve timing when the intake and exhaust valves are actually operating to open and close in conformity to the low-speed valve timing. In the former case, the mixture becomes so lean that temperature in the combustion chamber rises abnormally to bring forth a condition in which the engine knocking is more likely, while in the latter case the mixture becomes so enriched as to cause deterioration of the emission and the catalyzer.

In order to deal with such cases, a confirmation means is provided to confirm that the valve timing has been changed over properly, so that when the proper valve-timing changeover is not confirmed by this confirmation means, there may be continued the fuel injection providing the fuel injection quantity selected to conform to the valve timing set before the changeover. With the above-described arrangement, it is assured that the fuel injection commensurate with the valve timing which is actually functioning then is carried out, thereby eliminating the above mentioned disadvantage.

The invention will now be illustrated by way of example only and with reference to the drawings, in which:

Figure 1 is a schematic diagram showing the method of the present invention applied to an engine;

Figure 2 is a diagram illustrating a valve timing changeover mechanism according to this invention;

Figure 3 is a diagram showing the characteristic curves for fuel injection quantities set for the high-speed valve timing and the low-speed valve timing;

Figure 4 is an enlarged view of a portion encircled in Figure 3;

Figure 5 is a diagram showing the $T_{VT}$ table;

Figure 6 is a diagram showing the valve timing changeover characteristics;

Figure 7 comprising Figs. 7A and 7B is a flowchart of the valve timing changeover control routine;

Figure 8 is a flowchart of the subroutine for retrieval of the $Ti_L$ map and the $Ti_H$ map; and

Figure 9 is a flowchart of the subroutine for calculation of $T_{VT}$.

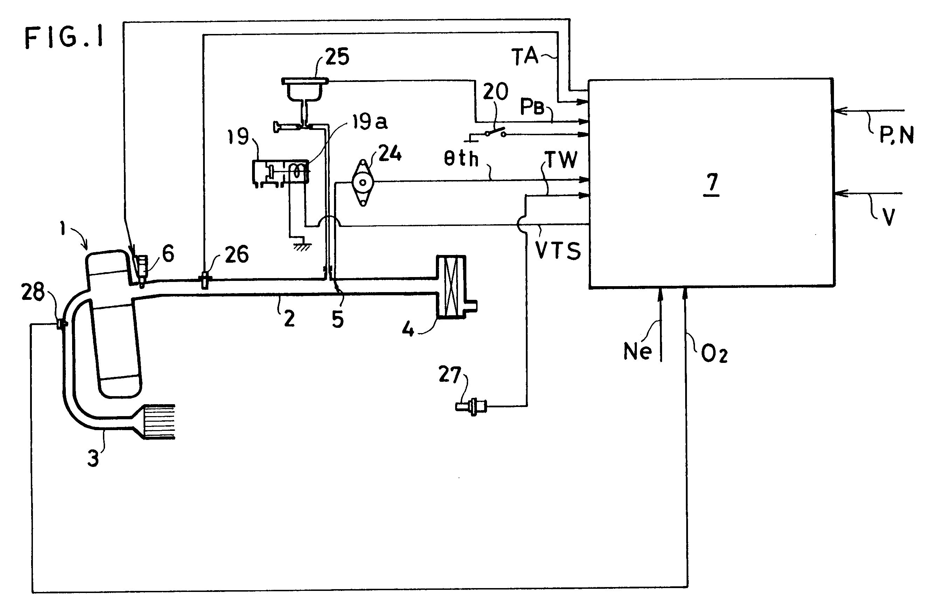

Referring to Figure 1, reference numeral 1 denotes an engine body, 2 denotes an intake passage, and 3 designates an exhaust passage. The intake passage 2 is provided with an air cleaner 4, a throttle valve 5 and an injector 6 in that order from the upstream side and quantity of fuel injection made through said injector 6 is variably controlled by an electronic control circuit 7, so that the engine arranged as above is an electronically controlled fuel injection type.

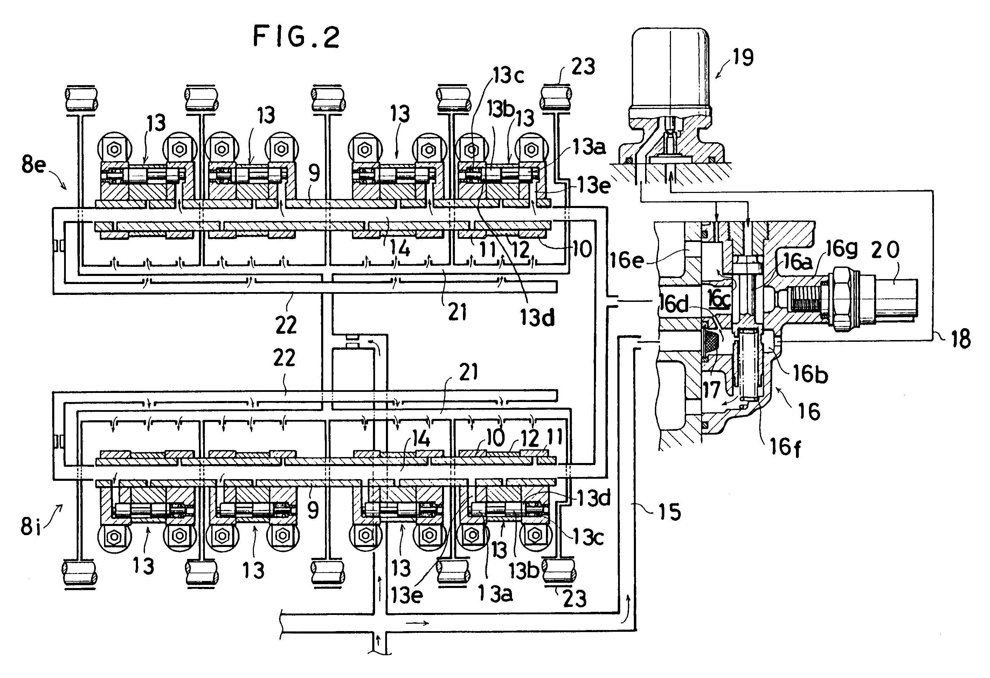

The engine used in this embodiment example of the present invention is a double overhead cam (DOHC), inline four-cylinder engine having a pair of intake and exhaust valves for each cylinder and, as shown in Figure 2, it is further provided with a valve mechanism 8i at the intake valve side and another valve mechanism 8e at the exhaust valve side, said valve mechanisms being operated to drive these intake and exhaust valves to open and close.

Both the valve mechanisms 8i and 8e are basically of the same construction, so that detailed explanation will be made only of the intake-side valve mechanism hereinbelow while omitting that of the exhaust-side valve mechanism. Note that both of said valve mechanisms are assigned with same symbols and reference numerals for their corresponding parts.

The intake-side valve mechanism 8i comprises: a rocker shaft 9 for the intake valves; a pair of driving rocker arms 10, 11 pivotally supported on the rocker shaft 9 for driving a pair of the intake valves of each cylinder and a free rocker arm 12 located intermediately between said pair of the driving rocker arms 10, 11 and also pivotally supported on said rocker shaft 9, said driving rocker arms 10, 11 being interlocked with a low-speed cam formed on a cam shaft for the intake valves and said free rocker arm 12 being interlocked with a high-speed cam formed on the cam shaft; and a changeover mechanism 13 through which both the driving rocker arms 10, 11 are detachably connected to the free rocker arm 12. In this arrangement, when the driving rocker arms 10, 11 are disconnected from the free rocker arm 12, the intake valves are operated to open and close with a low-speed valve timing at which the valve-open duration and the valve-lift amount are made relatively smaller by means of the low-speed cam. On the other hand, when these arms are connected to each other, the intake valves are operated at a high-speed valve timing at which the valve-open duration and the valve-lift amount are relatively larger.

The changeover mechanism 13 comprises: a first connecting pin 13a which can be engaged with and disengaged from the free rocker arm 12, said first connecting pin 13a being inserted in the first driving rocker arm 10, that is, one of the two driving rocker arms 10, 11; a second connecting pin 13b which can be engaged with and disengaged from the second driving rocker arm 11, that is, the other of the two driving rocker arms 10, 11, said second connecting pin 13b being inserted in the free rocker arm 12; and a restriction pin 13d urged towards the free rocker arm 12 by a spring 13c inserted in the second driving rocker arm 11. There is formed in the first driving rocker arm 10 a hydraulic chamber 13e providing an oil pressure to push the first connecting pin 13a towards the free rocker arm 12, said hydraulic chamber 13e being communicated with an oil supplying passage 14 formed in the rocker shaft 9. When the hydraulic chamber 13e is charged with a hydraulic oil through the oil-supplying passage 14, the first connecting pin 13a becomes engaged with the free rocker arm 12 and, pushed by the first connecting pin 13a, the second connecting pin 13b comes to engage with the second driving rocker arm 11, so that both the driving rocker arms 10, 11 and the free rocker arm 12 are connected to each other to change the valve timing to a high-speed one. On the other hand, when oil pressure in the hydraulic chamber 13e is lowered, the second and the first connecting pins 13b and 13a are urged by the spring 13c through the restriction pin 13d and thus pushed back into the free rocker arm 12 and the first driving rocker arm 10, respectively, so as to disconnect both the driving rocker arms 10, 11 from the free rocker arm 12 and change the valve timing to a low-speed one.

Then, an oil passage 15 for supplying oil from an oil pump not shown is connected to the aforementioned oil supplying passage 14 through a changeover valve 16 attached to an end portion of the cylinder head, so that when a spool type valve body 16a of the changeover valve 16 is positioned at the upper closed position, an inlet port 16b communicating with the oil passage 15 through an oil filter 17 and an outlet port 16c communicating with the oil supplying passage 14 may be communicated with each other only through an orifice 16d. At this time, the outlet port 16c comes to be communicated with a drain port 16e which opens in the upper space in the cylinder head with the result that the oil pressure in the oil supplying passage 14 is decreased. When the spool type valve body 16a is shifted to the lower open position, the inlet port 16b and the outlet port 16c become communicated with each other through an annular groove provided in the spool type valve body 16a while the outlet port 16c becomes disconnected from the drain port 16e, so that the oil pressure in the oil supplying passage 14 is increased.

The spool type valve body 16a is arranged such that the changeover thereof to the open position is carried out against the urging force of a spring 16f by pilot pressure inputted through a pilot oil passage 18 branching out from the inlet port 16b. The pilot oil passage 18 is provided with a normally closed type electromagnetic valve 19. An electric current to energize a solenoid 19a of the electromagnetic valve 19 is controlled by output signal VTS from the electronic control circuit 7 as shown in Figure 1. When the electromagnetic valve 19 is opened with energization of the solenoid 19a (shown in Figure 1), the spool type valve body 16a is moved to its open position so that the valve timing is changed over to a high-speed one as described in the foregoing. When the electric current energizing the solenoid 19a is stopped to close the electromagnetic valve 19, the spool type valve body 16a is changed over to the closed position so that the valve timing is changed over to a low-speed one.

In addition, in order to confirm the changeover operation of the spool type valve body 16a, there is provided on a housing 16g in the changeover valve 16 a hydraulic switch 20 that detects oil pressure at the outlet port 16c and turns on when the detected oil pressure is low and turns off when the detected oil pressure is high.

Referring to Figure 2, reference numeral 21 denotes a lubricant passage of the valve mechanism, 22 designates a lubricant passage of the valve mechanism for the high-speed valve timing operation, and 23 denotes a cam holder.

The valve timing changeover means and oil passage arrangement described above are not particularly different from those disclosed in the Japanese Utility Model Registration Application No. Jitsugan Sho 63-82588 filed on June 22, 1988 by the applicants of the present patent application. Inputted in the electronic control circuit 7 are engine revolution speed (Ne) signals from an engine revolution speed sensor, throttle opening-degree ($\theta$th) signals from a throttle opening sensor 24, intake negative pressure ($P_B$) signals and intake temperature (TA) signals, respectively, from a pressure sensor 25 and a temperature sensor 26, both of which are connected to the intake passage 2 downstream of the throttle valve 5, water temperature (TW) signals from a water temperature sensor 27, vehicle speed (V) signals from a vehicle speed sensor, signals from the aforesaid hydraulic switch 20, $O_2$ signals from an oxygen concentration sensor 28 provided in the exhaust passage 3 and, in case of an automatic transmission car, additionally, parking (P) and neutral (N) signals from a shift lever position switch. Based on the operating condition determined from these signals, an appropriate fuel injection quantity is calculated and a suitable valve timing selected.

Here, the following equation holds:
$$Tout = K_1 Ti + K_2,$$
where Tout stands for fuel injection quantity, Ti for standard fuel injection quantity, $K_1$ for correction factor, and $K_2$ for constant term. It should be noted that $K_1$ used herein includes: an intake temperature correction factor $K_{TA}$ by which the fuel injection quantity is increased when the intake temperature and/or the water temperature are low; a high-load fuel increase factor $K_{WOT}$ by which the fuel injection quantity is increased in a prescribed high-load region determined by the water temperature correction factor $K_{TW}$, Ne, $P_B$ and $\theta$th; and a feedback correction factor $KO_2$ by which a deviation of the A/F ratio from the theoretical value A/F ratio in an $O_2$ feedback region with a comparatively low engine revolution speed (say, 4,000 rpm or lower) is corrected, while $K_2$ includes a fuel increase constant for acceleration by which the fuel injection quantity is increased during acceleration of a car.

The standard fuel injection quantity Ti is set in such a manner that an intake mixture, in combination with a quantity of air intake into a cylinder in a particular operating condition of the engine determined by Ne and $P_B$, may provide a desired A/F ratio close to the theoretical value of A/F ratio. Two sets of Ti map, one for the low-speed valve timing and the other for the high-speed valve timing, are prepared and stored in the electronic control circuit 7.

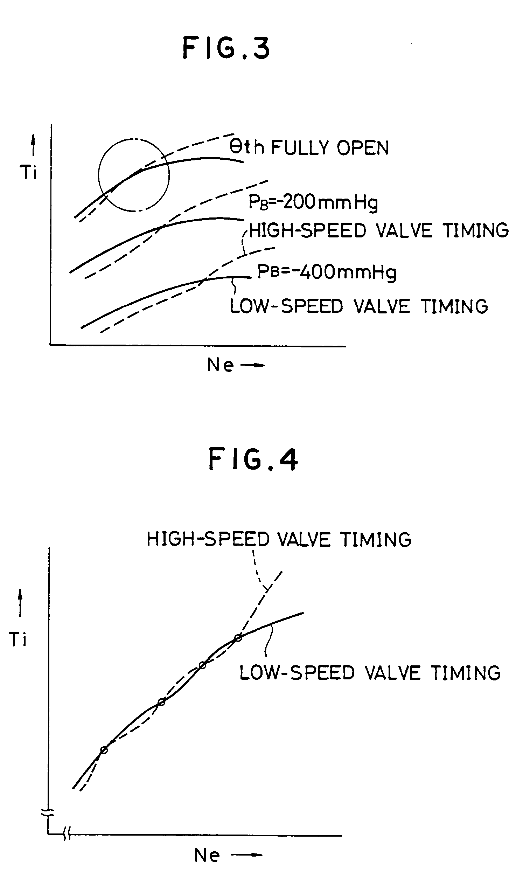

In Figure 3, the Ti value in the Ti map for the low-speed valve timing is indicated by a solid line curve while the Ti value in the Ti map for the high-speed valve timing is indicated by a dotted line curve. As is clear from Figure 3, the intake air quantity tends to level off with the increase of Ne at the low-speed valve timing. On the other hand, at the high-speed valve timing, the intake air quantity keeps on increasing further to eventually surpass that at the low-speed value timing as the charging efficiency increases with the increase of Ne, so that the Ti value for the low-speed valve timing and that for the high-speed valve timing come to coincide with each other at some point on the curves. At this point, the air intake quantity is the same whether at the low-speed or high-speed valve timing. So is the A/F ratio at this point. Therefore, the engine output power is also practically the same at this point.

The charging efficiency subtly fluctuates with the change of Ne. This fluctuation becomes more conspicuous in the range approaching the point at which the throttle opening ($\theta$th) is fully open so that, as shown in Figure 4, the Ti value for the low-speed valve timing and that for the high-speed valve timing become equal to each other at a plurality of points. As will be discussed later, when the valve timing is changed over at one of these points where the Ti value for the low-speed valve timing and that for the high-speed valve timing become equal to each other, the valve timing changeover is more likely to cause a hunting especially in the range where the throttle opening is large, thus adversely affecting durability of the changeover mechanism 13.

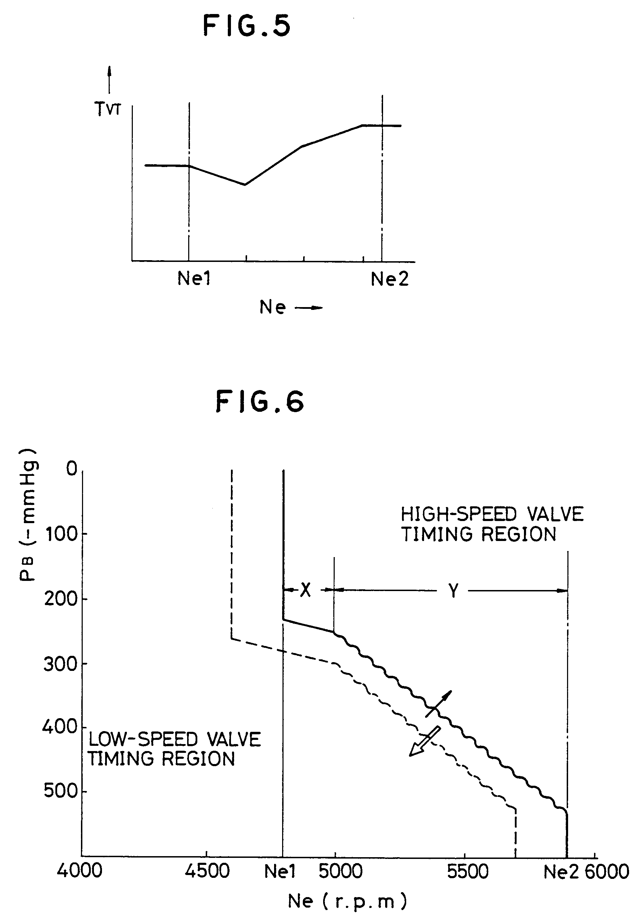

In the high-load region, the mixture is enriched according to the above-mentioned high-load fuel increase factor $K_{WOT}$. Since a higher output power can be brought about with the high-speed valve timing in this high-load region, a high-load determinant reference value $T_{VT}$ based on the fuel injection quantity is experimentally obtained as shown in Figure 5. A $T_{VT}$ value corresponding to Ne is calculated from a $T_{VT}$ table and when Tout is greater than $T_{VT}$, the valve timing is changed over to the high-speed one as will be explained later. In such a case, if it is prearranged such that the Tout $\geqq T_{VT}$ region includes regions in which, as discussed in the foregoing, the Ti values for the low-speed valve timing and the high-speed valve timing become equal to each other, the abovementioned hunting occurring with changeover of the valve timing can be prevented. A $T_{VT}$ table applicable to an automatic vehicle is different from that applicable to a manual vehicle.

In order to prevent an over-revolution speed of the engine, fuel is cut when Ne exceeds the revolution limiter value $N_{HFC}$. If a load acting on the timing belt is considered in this connection, it can be seen that the shorter the valve-open duration is, the greater the acceleration of the valve opening operation, and as a result, the load on the timing belt becomes greater, while the revolution speed Ne which causes a valve jump becomes lower due to an increase in said acceleration rate. Therefore, an allowable revolution speed of the engine should be different between the low-speed valve timing in which the valve-open duration is shorter and the high-speed valve timing in which the valve-open duration is longer, so that in this embodiment example the revolution limiter value is set at a comparatively lower one $N_{HFC1}$ (for example, 7500 rpm) for the low-speed valve timing and at a comparatively higher one $N_{HFC2}$ for example, 8100 rpm) for the high-speed valve timing.

Next, referring to Figure 6, explanation will now be made of valve timing changeover characteristics. In Figure 6, a solid-line curve shows the changeover characteristic observed when the valve timing is changed over from the low-speed one to the high-speed one, while the dotted-line curve shows that observed when changing over in the opposite way.

A valve timing changeover is performed in a region of the engine revolution speeds ranging between the lower-limit engine revolution speed Ne1 at which the engine output obtained with the low-speed valve timing always exceeds that obtained with the high-speed valve timing and the upper-limit engine revolution speed Ne2 at which the engine output obtained with the high-speed valve timing always exceeds that obtained with the low-speed valve timing. In this embodiment example of the present invention, the valve timing changeover from the low-speed one to the high-speed one and vice versa are so set as to have a hysteresis; for example, Ne1 set at 4800 rpm/4600 rpm and Ne2 at 5900 rpm/5700 rpm.

In Figure 6, the region or range represented by X is one in which the valve timing changeover is performed through comparison of $T_{VT}$ with Tout while the region or range denoted by Y is one in which the valve timing changeover is performed through comparison made between a Ti value in the Ti map (hereinafter referred to as $Ti_L$ map) for the low-speed valve timing and a Ti value in the Ti map (hereinafter referred to as $Ti_H$ map) for the high-speed valve timing. Since the changeover characteristic in the X region is affected also by other parameters than Ne and $P_B$ having much to do with calculation of Tout, it cannot be shown exactly in the graph of Figure 6 in which the horizontal axis represents Ne and the vertical axis represents $P_B$, so that the one shown therein is more for an illustration purpose.

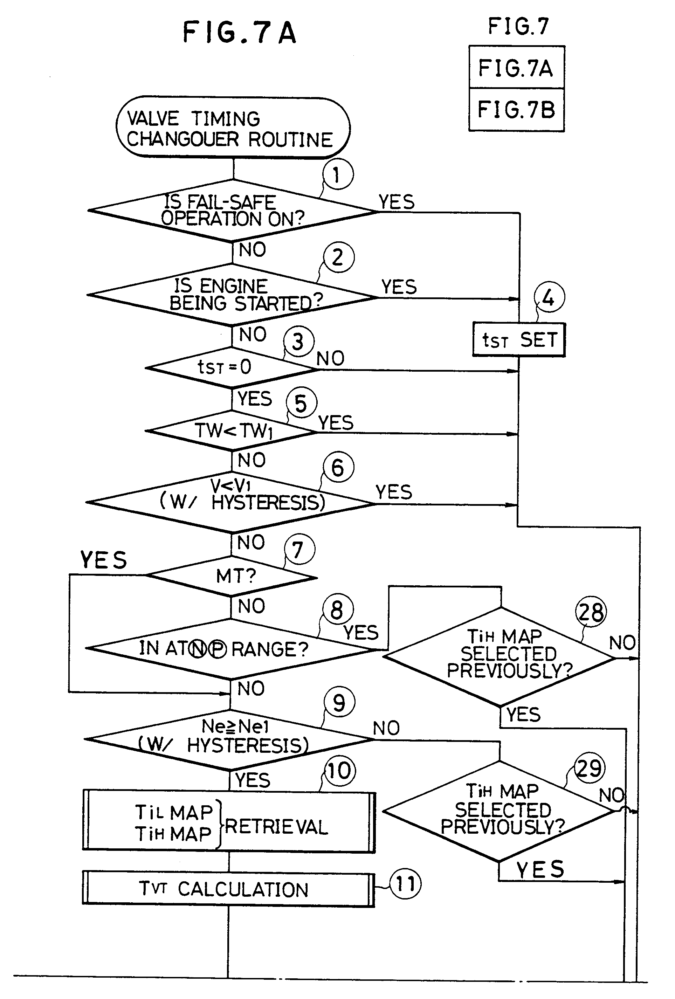

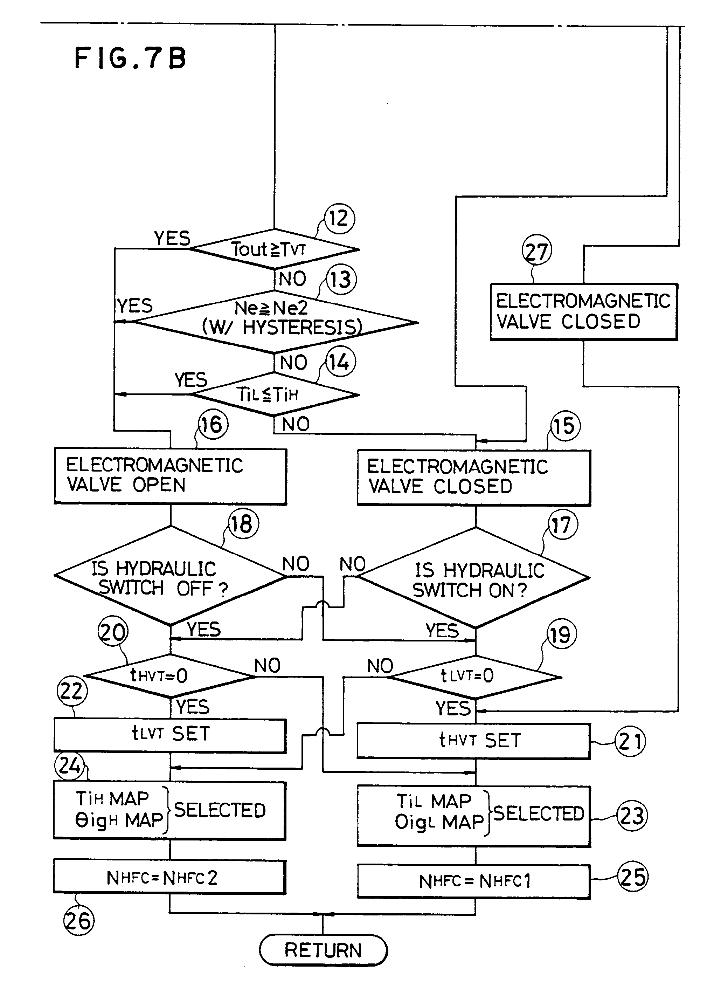

Next, referring to Figure 7, we will now explain control by the electronic control circuit 7 of the valve timing changeover, that is a control program for output of signal VTS to the electromagnetic valve 19.

Step 1 determines whether or not signals from the respective sensors are being normally inputted into the electronic control circuit 7 or, in other words, one for determining whether to start a fail-safe operation.

Step 2 determines whether or not the engine is being started and step 3 determines whether or not the remainder time $T_{ST}$ of the delay timer has elapsed to 0. A time setting for $T_{ST}$ (e.g. 5 seconds) is performed in a step 4 during the engine starting so that the timing operation may start after the start of the engine. Step 5 determines whether or not the water temperature TW is lower than the preset one TW1 (for instance, 60°C), that is, whether or not the warming up of the engine has been achieved. Step 6 determines whether or not the vehicle speed V is lower than the preset lowest vehicle speed V1 (for instance, 8 km/5km with a hysteresis), step 7 determines whether or not it is a manual vehicle (MT), step 8 determines, in case of an automatic vehicle (AT), whether the shift lever is set at the parking (P) position or the neutral (N) position, and step 9 determines whether or not Ne is greater than the above mentioned lower-limit value Ne1, so that when the fail-safe operation is going on or the engine is being started or the time preset with the delay timer has not elapsed as yet after the start of the engine, or warming up of the engine is going on, or the vehicle is parked or running at a slow speed, or the shift gear is set at P or N position, or Ne is smaller than $Ne_1$, the electromagnetic valve 19 is closed to hold the valve timing set at the low-speed one as will be explained later.

When it is determined at the step 9 that the Ne $\geqq$ Ne1, the $Ti_L$ map and $Ti_H$ map are retrieved at a step 10 in order to obtain a Ti value in the $Ti_L$ map (said value being hereinafter referred to as $Ti_L$) and a Ti value in the $Ti_H$ map (said value being hereinafter referred to as $Ti_H$) which correspond to the current Ne and $P_B$. Then, in a next step 11, a $T_{VT}$ corresponding to Ne is calculated from the $T_{VT}$ table. In a step 12, this $T_{VT}$ is compared with Tout obtained previously (that is, Tout obtained in the immediately preceding round of operation) so as to determine whether or not it is Tout $\geqq T_{VT}$, that is, to determine whether it is in the high-load condition in which the mixture is enriched. When it is found Tout is smaller than $T_{VT}$, the program is advanced to step 13 for determining whether Ne is higher than the aforementioned upper-limit value $Ne_2$ or not. If it is found that Ne is smaller than $Ne_2$, the program is advanced to a step 14 to compare $Ti_L$ and $Ti_H$ with each other, both of which have been obtained at the step 10, and if $Ti_L$ is larger than $Ti_H$ ($Ti_L > Ti_H$), a command or instruction to close the electromagnetic valve 19 is given out at a step 15, said instruction being tantamount to one to change over the valve timing to the low-speed one. When Tout $\geqq T_{VT}$, Ne $\geqq Ne_2$, or $Ti_L \leqq Ti_H$, a command or instruction to open the electromagnetic valve 19, that is, an instruction to change over the valve timing to the high-speed one is given out in a step 16. Further, when an instruction to close the valve 19 in the step 15 has been given out, it is determined at a step 17 whether or not the hydraulic switch 20 has been turned on, that is, whether or not the oil pressure in the oil supplying passage 14 has been reduced to a lower level. When the hydraulic switch 20 has been turned on, whether or not the remainder time $t_{LVT}$ for the low-speed valve timing changeover delay timer has been reduced to O is determined at a step 19. When it is found to be $t_{LVT} = 0$, the remainder time $t_{HVT}$ for the high-speed valve timing changeover delay is set to a predetermined time (for example, 0.1 sec) at a step 21. Next, at a step 23, a selection processing is performed to select the $Ti_L$ map as a Ti map for use with a fuel injection control routine, and the ignition timing map for the low-speed valve timing ($\theta_{igL}$ map) as an ignition timing map, respectively. Then, at a step 25, a processing is performed so as to turn the revolution limiter value $N_{HFC}$ to the value $N_{HFC1}$ for the low-speed valve timing.

When the instruction to open the valve has been given out at the step 16, it is determined at a step 18 whether or not the hydraulic switch 20 is turned off, that is, to determine whether or not the oil pressure in the oil supplying passage 14 has increased to a higher level. When the hydraulic switch 20 has been turned off, it is at a step 20 in which whether or not the remainder time $t_{HVT}$ for the high-speed valve timing changeover delay timer has been reduced to O. If it is found to be $t_{HVT} = O$, the remainder time $t_{LVT}$ for the low-speed valve timing changeover delay is set to a predetermined time (for example, 0.2 second) at a step 22. Next, at a step 24, a selection processing is performed to select the $Ti_H$ map as a Ti map for use with the fuel injection control routine, and the ignition timing map for the high-speed valve timing($\theta_{igH}$) as an ignition timing map, respectively. Then, at a step 26, a processing is performed so as to turn the revolution limiter value $N_{HFC}$ to the value $N_{HFC2}$ for the high-speed valve timing.

The time set with each of both the changeover delay timers described in the foregoing is predetermined so as to be adapted to the response delay time when the changeover mechanism 13 of each cylinder completes the required changeover operation as a result of the oil pressure change in the oil supplying passage 14. When the electromagnetic valve is being changed over from the open position to the closed position, the program advances in order of 17 - 20 - 22 - 24 - 26 until the hydraulic switch 20 is turned on. Even with said switch turned on, the program is advanced in order of 17 - 19 -24 - 26 until the changeover mechanism 13 of each cylinder has been turned to the low-speed valve timing side. Furthermore, when the changeover valve 16 is not turned to its closed position even with an instruction to close the valve due to a malfunction of the electromagnetic valve 19 or the changeover valve 16 with the result that the hydraulic switch 20 remains unable to turn on no matter how long it is waited for, the program is then advanced similarly in order of 17 - 20 - 22 - 24 - 26 as in the foregoing, indicating that unless the changeover mechanism 13 of each of all the cylinders has been turned to the low-speed valve timing side, the fuel injection remains so controlled as to be one suitable for the high-speed valve timing. When the electromagnetic valve 19 is changed over from the closed position to the open position, the fuel injection should remain so controlled as to be one suitable for the low-speed valve timing in the like manner as above unless the changeover mechanism 13 of each of all the cylinders has been set to the high-speed valve timing side.

Also, when the fail-safe operation is going on, or the engine is being started or the time preset with the delay timer has not expired as yet after the start or the engine, or the engine warming-up is still going on, or the vehicle is parked or running at a slow speed, as stated previously herein, the program is advanced to go from any of the steps 1 through 3 or 5 through 6 to the step 27 to give out an instruction to close the electromagnetic valve 19, and further advanced to go from the step 27 to the steps 21 - 23 - 25 in that order. When at N or P position, the program is advanced to go from the step 8 to the step 28 in which whether or not the $Ti_H$ map has been selected previously is determined. Then, when Ne is found to be smaller than $Ne_1$, the program is advanced to go from the step 9 to the step 29 at which a like determination or discrimination as made at the step 29 is carried out. If it is found that the $Ti_H$ map has been selected previously, the program is advanced to go from the steps 28,29 to the step 15. If the $Ti_H$ map has not been selected previously for use, that is, when the changeover mechanism 13 of each of all the cylinders has not been set to the high-speed valve timing side, the program advances in order of 27 -21 - 23 - 25 as in the foregoing so that the fuel injection may be controlled so as to be adapted to the low-speed valve timing irrespective of the hydraulic switch 20. This is a countermeasure designed to deal with the hydraulic switch in case the switch 20 should remain turned off due to breaking of its wiring.

More specifically, $N_{HFC1}$ is set higher than $Ne_2$. Thus, normally, the valve timing is changed over to the high-speed one before Ne has increased to $N_{HFC1}$, causing the $N_{HFC1}$ to be changed over to $N_{HFC2}$. Therefore, there is no fuel cut effect at $N_{HFC1}$. In the operating condition in which the program is advanced to go from the steps 1 through 8 to the step 27, however, the low-speed valve timing is retained even when Ne comes to exceed $Ne_2$ due to racing or the like so that a fuel cut is effected at $N_{HFC1}$. Further, this fuel cut at $N_{HFC1}$ goes on until $t_{HVT}$ becomes zero (0), that is, until the changeover mechanism 13 is actually set to the high-speed valve timing side, even after the low-speed valve timing has been changed over to the high-speed one.

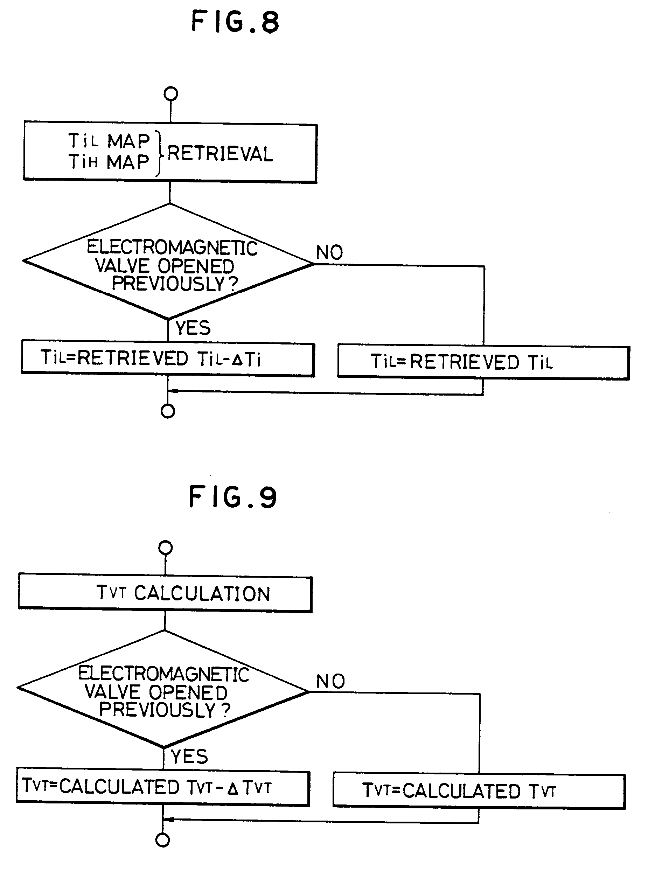

In the subroutine for retrieval of the $Ti_L$ map and the $Ti_H$ map at the step 10, whether or not an instruction to open the electromagnetic valve 19 has been previously given out is determined as indicated in Figure 8. When it is found that the instruction to open the valve has not been given out, the $Ti_L$ value to be used at the step 14 is taken as a $Ti_L$ value retrieved from the $Ti_L$ map. When the instruction to open the valve has been given out, a processing to subtract a predetermined amount of hysteresis $\Delta Ti$ from the retrieved $Ti_L$ value is performed so as to use the balance as the $Ti_L$, and the changeover characteristic in the Y region in Figure 6 is then added with the hysteresis.

Also in the subroutine for calculation of $T_{VT}$ at the step 11, as shown in Figure 9, whether or not the instruction to open the electromagnetic valve 19 has been given out previously is determined. When the instruction to open the valve has not been given out, $T_{VT}$ to be used at the step 12 is one calculated from the $T_{VT}$ Table. When the instruction to open the valve has been given out, a processing to subtract a predetermined amount of hysteresis $\Delta T_{VT}$ from the calculated value is performed so as to use the balance as the $T_{VT}$, and the changeover characteristic in the X region in Figure 6 is then added with the hysteresis.

## Claims

1. A control method for valve-timing changeover in an engine in which the engine is an electronically controlled fuel injection type, and in which valve timing for at least each one of the intake valves or the exhaust valves can be changed over between a low-speed valve timing suitable for a low-speed revolution range of the engine and a high-speed valve timing suitable for a high-speed revolution range of the engine, said method comprising the steps of:

establishing two sets of fuel injection quantities for selected operating conditions of the engine, one set of which are first fuel injection quantities suitable for the low-speed valve timing and the other set of which are second fuel injection quantities suitable for the high-speed valve timing;

detecting the selected operating conditions of the engine;

obtaining a value of the first fuel injection quantity from the one set and a value of the second fuel injection quantity from the other set for the detected operating conditions of the engine; and

comparing the obtained values for the first and second fuel injection quantities and outputting a signal for causing a changeover of the valve timing when both of said values are substantially equal to each other.

2. A control method for valve-timing changeover in an engine as claimed in claim 1, wherein a map having the one set therein of the first fuel injection quantities and another map having the other set therein of the second fuel injection quantities are prepared by using the number of engine revolutions and the load on the engine as parameters for defining the selected operating conditions of the engine, and the values for the first and second fuel injection quantities under the detected operating conditions of the engine are read out from the maps.

3. A control method for valve-timing changeover in an engine as claimed in claim 1 or 2, wherein the value for the fuel injection quantity to be used in controlling the fuel injection is changed over between the value of the first fuel injection quantity and the value of the second fuel injection quantity depending on the changeover of the valve timing.

4. A control method for valve-timing changeover in an engine as claimed in claim 3, wherein means for determining whether the changeover of the valve timing has occurred is provided, and the changeover of the value of the fuel injection quantity to be used in controlling the fuel injection is performed after the means for determining has confirmed the changeover of the valve timing which corresponds to the changeover signal for the valve timing.

5. A control method for valve-timing changeover in an engine as claimed in any preceding claim, wherein first means for setting the ignition timing to suit the low-speed valve timing and second means for setting the ignition timing to suit the high-speed valve timing are provided, and the ignition timing is controlled by selectively using one of the first and second means for setting the ignition timing depending on the changeover of the valve timing.


**Patentansprüche**

1. Steuerverfahren zum Umschalten der Ventilsteuerung in einem Motor mit elektronischer Kraftstoffeinspritzung, wobei die Ventilsteuerung für wenigstens eines der Einlaß- oder Auslaßventile umschaltbar ist zwischen einer Niedriggeschwindigkeits-Ventilsteuerung für einen niedrigen Drehzahlbereich und einer Hochgeschwindigkeits-Ventilsteuerung für einen hohen Drehzahlbereich des Motors,
mit folgenden Verfahrensschritten:
Einrichten zweier Sätze von Kraftstoffeinspritzmengen für ausgewählte Betriebsbedingungen des Motors, wobei einer dieser Sätze aus an die Niedriggeschwindigkeits-Ventilsteuerung angepaßten ersten Kraftstoffeinspritzmengen und der andere Satz aus an die Hochgeschwindigkeits-Ventilsteuerung angepaßten zweiten Kraftstoffeinspritzmengen besteht,
Detektieren der ausgewählten Betriebsbedingungen des Motors,
Gewinnen eines Werte: der ersten Kraftstoffeinspritzmenge aus dem einen Satz sowie eines Wertes der zweiten Kraftstoffeinspritzmenge aus dem anderen Satz für die detektierten Betriebsbedingungen des Motors, und
Vergleichen der für die erste und die zweite Kraftstoffeinspritzmenge gewonnenen Werte und Ausgeben eines Signal für das Umschalten der Ventilsteuerung, wenn beide Werte einander im wesentlichen gleich sind.

2. Steuerverfahren zum Umschalten der Motor-Ventilsteuerung nach Anspruch 1, bei dem eine Liste mit dem einen Satz von Kraftstoffeinspritzmengen vorbereitet wird sowie eine andere Liste mit dem anderen Satz von Kraftstoffeinspritzmengen, indem die Motordrehzahlen und die Motorbelastung als Parameter zur Definition der ausgewählten Betriebsbedingungen des Motors herangezogen werden, und die unter den detektierten Betriebsbedingungen des Motors geltenden Werte für die erste und die zweite Kraftstoffeinspritzmenge aus den Listen ausgelesen werden.

3. Steuerverfahren zum Umschalten der Motor-Ventilsteuerung nach Anspruch 1 oder 2, bei dem der zur Steuerung der Kraftstoffeinspritzung zu verwendende Wert für die Kraftstoffeinspritzmenge in Abhängigkeit von dem Umschalten der Ventilsteuerung zwischen dem Wert der ersten Kraftstoffeinspritzmenge und der zweiten Kraftstoffeinspritzmenge umgeschaltet wird.

4. Steuerverfahren zum Umschalten der Motor-Ventilsteuerung nach Anspruch 3, mit einer Einrichtung, die dazu dient, festzustellen, ob die Umschaltung der Ventilsteuerung stattgefunden hat, und bei dem die Umschaltung des für die Steuerung der Kraftstoffeinspritzung zu verwendenden Werts der Kraftstoffeinspritzmenge durchgeführt wird, nachdem die genannte Einrichtung das Umschalten der Ventilsteuerung bestätigt hat, was dem Umschaltsignal für die Ventilsteuerung entspricht .

5. Steuerverfahren zum Umschalten der Motor-Ventilsteuerung nach einem der vorhergehenden Ansprüche, bei dem eine erste Einrichtung vorgesehen ist zur Einstellung des Zündzeitpunkts in Anpassung an die Niedriggeschwindigkeits-Ventilsteuerung sowie eine zweite Einrichtung zur Einstellung des Zündzeitpunkts in Anpassung an die Hochgeschwindigkeits-Ventilsteuerung, und bei dem der Zündzeitpunkt unter wahlweiser Verwendung entweder der ersten oder zweiten Einrichtung zur Einstellung des Zündzeitpunkts in Abhängigkeit von.dem Umschalten der Ventilsteuerung gesteuert wird.


**Revendications**

1. Procédé de commande pour la modification du réglage des soupapes d'un moteur, procédé dans lequel le moteur est du type à injection de carburant commandée électroniquement, et dans lequel le réglage d'au moins chacune des soupapes d'admission ou des soupapes d'échappement peut être modulé entre un réglage des soupapes en mode faible vitesse, approprié pour une plage de révolutions faible vitesse du moteur, et un réglage des soupapes en mode grande vitesse, approprié pour une plage de révolutions grande vitesse du moteur, ledit procédé comprenant les étapes consistant à :

établir deux groupes de'quantités d'injection de carburant pour des conditions de fonctionnement sélectionnées du moteur, parmi lesquels l'un des groupes englobe des premières quantités d'injection de carburant appropriées pour le réglage des soupapes en mode faible vitesse, et l'autre groupe englobe des secondes quantités d'injection de carburant appropriées pour le réglage des soupapes en mode grande vitesse ;

détecter les conditions de fonctionnement sélectionnées du moteur ;

obtenir, pour les conditions de fonctionnement détectées du moteur, une valeur de la première quantité d'injection de carburant à partir de l'un des groupes, et une valeur de la seconde quantité d'injection de carburant à partir de l'autre groupe ; et

comparer les valeurs obtenues pour les première et seconde quantités d'injection de carburant, et délivrer un signal pour provoquer une modification du réglage des soupapes lorsque les deux valeurs précitées sont sensiblement égales l'une à l'autre.

2. Procédé de commande pour la modification du réglage des soupapes d'un moteur, selon la revendication 1, dans lequel un topogramme renfermant l'un des groupes des premières quantités d'injection de carburant et un autre topogramme renfermant l'autre groupe des secondes quantités d'injection de carburant sont élaborés en utilisant, comme paramètres, le nombre des révolutions du moteur et la charge imposée à ce moteur, en vue de définir les conditions de fonctionnement sélectionnées dudit moteur, puis les valeurs relatives aux première et seconde quantités d'injection de carburant dans les conditions de fonctionnement détectées du moteur sont lues à partir des topogrammes.

3. Procédé de commande pour la modification du réglage des soupapes d'un moteur, selon la revendication 1 ou 2, dans lequel la valeur relative à la quantité d'injection de carburant, devant être utilisée pour commander l'injection de carburant, est modulée entre la valeur de la première quantité d'injection de carburant et la valeur de la seconde quantité d'injection de carburant, en fonction de la modification du réglage des soupapes.

4. Procédé de commande pour la modification du réglage des soupapes d'un moteur, selon la revendication 3, dans lequel un'moyen est prévu pour déterminer si la modification du réglage des soupapes a eu lieu, et la modulation de la valeur de la quantité d'injection de carburant, devant être utilisée pour commander l'injection de carburant, est effectuée après que le moyen de détermination a confirmé la modification du réglage des soupapes qui correspond au signal de modification du réglage des soupapes.

5. Procédé de commande pour la modification du réglage des soupapes d'un moteur, selon une quelconque revendication précédente, dans lequel sont prévus un premier moyen de réglage de l'avance à l'allumage, pour adapter le réglage des soupapes en mode faible vitesse, et un second moyen de réglage de l'avance à l'allumage, pour adapter le réglage des soupapes en mode grande vitesse, et le réglage de l'avance à l'allumage est commandé en utilisant sélectivement l'un des premier et second moyens pour régler l'avance à l'allumage en fonction de la modification du réglage des soupapes.

EP 0 359 363 B1

FIG.1

FIG.2

# FIG.3

θth FULLY OPEN

P_B=-200mmHg
HIGH-SPEED VALVE TIMING

P_B=-400mmHg
LOW-SPEED VALVE TIMING

Ti

Ne →

# FIG.4

HIGH-SPEED VALVE TIMING

LOW-SPEED VALVE TIMING

Ti

Ne →

# FIG.5

# FIG.6

# FIG.7A

**FIG.7**

| FIG.7A |
|---|
| FIG.7B |

VALVE TIMING CHANGOUER ROUTINE

① IS FAIL-SAFE OPERATION ON? — YES

NO

② IS ENGINE BEING STARTED? — YES

NO

③ $t_{ST} = 0$ — NO

YES

④ $t_{ST}$ SET

⑤ $TW < TW_1$ — YES

NO

⑥ $V < V_1$ (W/ HYSTERESIS) — YES

NO

⑦ MT? — YES

NO

⑧ IN AT(N)(P) RANGE? — YES

NO

② ⑧ $T_{iH}$ MAP SELECTED PREVIOUSLY? — NO

YES

⑨ $Ne \geq Ne_1$ (W/ HYSTERESIS) — NO

YES

⑩ $T_{iL}$ MAP / $T_{iH}$ MAP RETRIEVAL

② ⑨ $T_{iH}$ MAP SELECTED PREVIOUSLY? — NO

YES

⑪ $T_{VT}$ CALCULATION

# FIG.7B

```
                              ┌─ 12
         YES      ╱ Tout ≧ TVT ╲
    ┌─────────────◇             ◇
    │             ╲             ╱
    │                  │ NO  ┌─ 13
    │          ╱ Ne ≧ Ne2 ╲
    │  YES    ╱ (W/ HYSTERESIS) ╲
    │◄───────◇                   ◇
    │         ╲                 ╱
    │                 │ NO  ┌─ 14
    │    YES    ╱ TiL ≦ TiH ╲
    │◄─────────◇             ◇
    │           ╲           ╱
    │  ┌─ 16          │ NO
```

27 ELECTROMAGNETIC VALVE CLOSED

16 ELECTROMAGNETIC VALVE OPEN

15 ELECTROMAGNETIC VALVE CLOSED

18 IS HYDRAULIC SWITCH OFF ?   NO    NO   IS HYDRAULIC SWITCH ON ?   17

20   $t_{HVT}=0$   NO   NO   $t_{LVT}=0$   19

22   $t_{LVT}$ SET

$t_{HVT}$ SET   21

24   TiH MAP / θigH MAP } SELECTED

TiL MAP / OigL MAP } SELECTED   23

NHFC = NHFC 2

NHFC = NHFC 1   25

26

RETURN

# FIG.8

```
            ○
            │
┌───────────────────────────┐
│  TiL MAP ⎫                 │
│          ⎬ RETRIEVAL       │
│  TiH MAP ⎭                 │
└───────────────────────────┘
            │
          ╱   ╲
        ╱       ╲
      ╱  ELECTRO- ╲
    ╱  MAGNETIC     ╲  NO
   ⟨  VALVE OPENED   ⟩────────────────┐
    ╲  PREVIOUSLY?  ╱                 │
      ╲           ╱                   │
        ╲       ╱                     │
          ╲   ╱                       │
          │ YES                       │
┌──────────────────────────┐  ┌──────────────────────┐
│ TiL=RETRIEVED TiL-ΔTi     │  │ TiL= RETRIEVED TiL   │
└──────────────────────────┘  └──────────────────────┘
            │                         │
            ○←────────────────────────┘
```

# FIG.9

```
            ○
            │
┌───────────────────────────┐
│      TVT CALCULATION       │
└───────────────────────────┘
            │
          ╱   ╲
        ╱       ╲
      ╱  ELECTRO- ╲
    ╱  MAGNETIC     ╲  NO
   ⟨  VALVE OPENED   ⟩────────────────┐
    ╲  PREVIOUSLY?  ╱                 │
      ╲           ╱                   │
        ╲       ╱                     │
          ╲   ╱                       │
          │ YES                       │
┌──────────────────────────┐  ┌──────────────────────┐
│ TVT=CALCULATED TVT-ΔTVT   │  │ TVT=CALCULATED TVT   │
└──────────────────────────┘  └──────────────────────┘
            │                         │
            ○←────────────────────────┘
```